# EUROPEAN PATENT SPECIFICATION

(11) **EP 1 319 525 B1**
(45) Date of publication and mention of the grant of the patent: **17.01.2007**
(21) Application number: 02380075.8
(22) Date of filing: 04.04.2002
(51) Int. Cl.: B44C 5/04

(54) **Mural reproductions**
Wandnachbildungen
Reproductions murals

(30) Priority: 12.12.2001 ES 200102758
(43) Date of publication of application: 18.06.2003
(73) Proprietor: Totalstone, S.A., 08013 Barcelona (ES)
(72) Inventor: Duran Calduch, Manuel, 08013 Barcelona (ES)
(74) Representative: Aragones Forner, Rafael Angel

(56) References cited:
- WO-A-99/00235
- WO-A-99/22947
- GB-A- 1 098 481
- US-A- 5 476 895

## Description

Several processes are known for obtaining sheet reproductions made of plastics material and obtained from originals formed by walls and ramparts and by generally stony or wooden architectural elements such as columns or arches, said reproductions even copying the gaps corresponding to the mortar or similar binder binding the stones or bricks.

The most commonly used process does generally consist in a moulding operation being carried out with resin and fibreglass in a mould being provided with a mould release layer and being obtained by means of applying a silicone layer to the wall or architectural element to be reproduced, the process comprising several stages using components to colour the reproductions.

WO 99/00235 relates a decorative and/or architectural composite article from a resin matrix containing a curable liquid resin, metal or stone particles and a catalyst bonded to a substrate. Also, the invention provides a process for creating as bonded composite having a curable resin matrix attached to a substrate, in which the resin matrix is cured to bond the inner surface to the substrate and to form a metallic or stone surface on the outer surface which gives the piece the appearance of a metal or stone object.

It is the object of this invention to improve this type of processes in order to more quickly obtain the reproductions with a better finish thus lowering the cost of the product and improving its quality.

In order to speed up the final stage in the manufacture of the reproduction, is polymerized and cured by heating, this process being characterized in that the heating of said reproduction are sped up by passing it through a longitudinal oven, its cooling upon its having come out of said oven being sped up by passing it through a cooling tunnel to thus be in a position to strip the obtained product upon its having come out of said tunnel.

This process is also characterized by the suction of the powdered components colouring the reproduction and not having been retained by the mould release layer, and by the application in three stages of the resin and the fibreglass to the mould having been provided with the colour, each of said three stages respectively involving the steps of: firstly spraying a mixture of resin and additives, then spreading the fibreglass with resin, and after this spraying additive resins in an oblique fashion to thus obtain a reproduction that is not prefect much after the fashion of the originals.

It is also important to carry out a compacting operation once having applied the resin and fibreglass.

These and other characteristics will be best made apparent by the following detailed description whose understanding will be made easier by the accompanying two sheets of drawings showing a practical embodiment cited only by way of example not limiting the scope of the present invention.

In the drawings:
Figure 1 shows an elevational view of a wall to be reproduced;
Figures 2 through 12 are sectional views diagrammatically showing the different process stages for the obtainment of the reproduction;
Figure 13 is an also sectional view showing the stripping of the obtained reproduction; and
Figure 14 is an elevational view of the reproduction showing the cutting lines for finishing the edges.

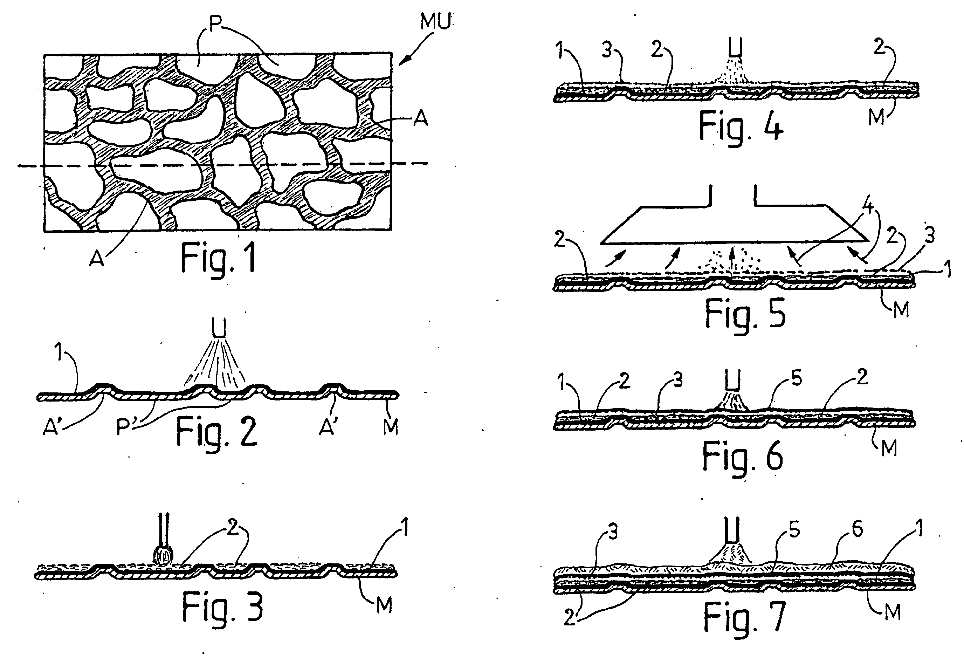

According to the drawings the architectural element to be reproduced is a wall being made of irregularly shaped stones (Figure 1).

The process for obtaining the reproduction is carried out as per the following stages:

The process starts with a silicone mould M having been directly obtained from the very wall MU and featuring a negative replica of the protruding portions P' corresponding to the stones and the recessed portions A' corresponding to the binder A binding the stones.

Once the mould has been placed on a rigid surface a release product or agent consisting of a wax layer 1 (Figure 2) is applied to its negative face, and thereupon the cavities P' of the mould are provided with a colour 2 in micronized powder form such as for example iron oxides (Figure 3), said colour corresponding to that of the stones P. Then a background colour 3 is applied corresponding to the joints being formed by the binder A (Figure 4).

A suction 4 is thereupon carried out in order to remove the powdered colour being loose because of not having been retained by the wax layer 1 (Figure 5).

A mixture of resin and additives can be optionally applied under pressure onto the powdered colours.

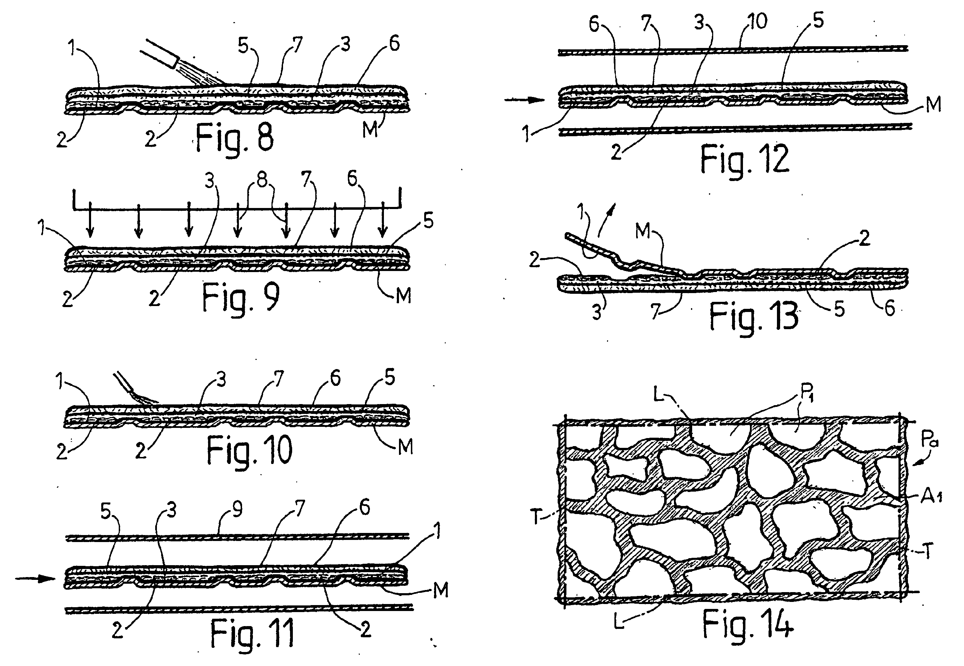

A mixture 5 of resin and additives (such as fillers, carbonates and others) is thereupon sprayed onto the mould having already been provided with the colour, after which a spread 6 of fibreglass with resin is applied to the same side of the mould (Figure 7) to be then followed by an oblique spraying of additive resins 7 (Figure 8) serving the purpose of soaking the fibreglass and facilitating its compaction.

The fibreglass is thereupon compacted in the next following operation as indicated by arrows 8 thus removing the air bubbles having possibly been formed in the fibre and resin layer (Figure 10).

The polymerization and curing of the resin is thereupon sped up by passing the mould with the deposits having been formed on it through a longitudinal oven 9 (Figure 11), said mould being after this passed through a cooling tunnel 10 (Figure 12) in order to thus speed up its cooling, this latter being thus carried out in a progressive fashion.

The flexible mould M is after this removed in a stripping operation (Figure 13).

The panel Pa (Figure 14) being finally obtained is an exact reproduction of the wall MU and both in shape and colour imitates the stones P as per the reliefs P₁ and the joints being formed by the binder A by way of the recess A₁, said panel having its rough edges removed by means of transversal and longitudinal cutting operations being indicated at T and L, respectively.

The panel is then ready for shipping after having been sheathed in a sheath of plastics material.

## Claims

1. A process for obtaining mural and architectural reproductions through the moulding of resins and fibreglass in a mould being provided with a mould release layer and having been obtained through the application of a silicone layer to the wall or architectural element to be reproduced, said process comprising several stages using components being apt to colour the reproductions, after the successive stages of the reproduction manufacturing process the polimerization and curing of said reproduction being sped up by heating this latter; **characterised in that** the heating of the reproduction is obtained by passing it through a longitudinal oven, and **in that** the progressive cooling of said reproduction is thereupon sped up by passing it through a cooling tunnel.

2. A process as per claim 1, **characterized in that** once having deposited in the mould the powdered components serving to colour the reproduction a sucking operation is carried out in order to remove the powder not having been retained by the mould release layer.

3. A process as per claim 1, **characterized in that** the resin and fibreglass are applied in three stages to the mould having been provided with the colour, each of said three stages respectively involving the following operations: in the first stage said mould is sprayed with a mixture of resin plus additives, in the second stage a spread of fibreglass with resin is applied thereon, and in the third stage a spraying with additive resins is carried out in an oblique fashion.

4. A process as per claim 1, **characterized in that** a compacting operation is carried out after the application of the resin and fibreglass.

5. A process as per claim 1, **characterized in that** in the final stages a retouching of the reproduction is carried out before its curing, and after having stripped the reproduction this latter's rough edges are removed by means of the pertinent transversal and longitudinal cutting operations.

## Patentansprüche

1. Verfahren zur Herstellung von Wand- und Baunachbildungen durch das Formen von Harzen und Glasfaser in einer mit einer Entformmittelschicht versehenen, durch die Auftragung einer Silikonschicht auf die nachzubildende Wand bzw. das nachzubildende Bauelement erhaltenen Form, wobei das vorgenannte Verfahren mehrere unter Verwendung von zur Farbgebung der Nachbildungen geeigneten Bestandteilen durchgeführten Stufen umfaßt, wobei die Polymerisation und Aushärtung der vorgenannten Nachbildung nach den einanderfolgenden Stufen des Nächbildungsherstellungsverfahrens durch eine Erwärmung der besagten Nachbildung beschleuningt werden; **dadurch gekennzeichnet, daß** die Erwärmung der Nachbildung durch ihre Durchführung durch einen längsgestreckten Ofen ausgeführt wird, und daß die allmähliche Abkühlung der obengenannten Nachbildung durch ihre Durchführung durch einen Kühltunnel darauf beschleunigt wird.

2. Verfahren nach Anspruch 1, **dadurch gekennzeichnet, daß** nach der Absetzung der zur Farbgebung der Nachbildung dienenden, pulverförmigen Bestandteile in der Form einen Saugvorgang durchgeführt wird, der zur Beseitigung des auf der Entformmittelschicht nicht anhaftenden Pulvers dient.

3. Verfahren nach Anspruch 1, **dadurch gekennzeichnet, daß** die Harz- und Glasfaserauftragung auf die mit der Farbe versehene Form in drei Stufen durchgeführt wird, die jeweils einem der folgenden Vorgänge entspricht: in der ersten Stufe wird die vorgenannte Form mit einem aus Harz und Zusatzstoffen bestehenden Gemisch aufgespritzt; in der zweiten Stufe wird die Glasfaser mit Harz darauf ausgebreitet; und in der dritten Stufe findet ein schräggerichtetes Aufspritzen mit Zusatharzew statt.

4. Verfahren nach Anspruch 1, **dadurch gekennzeichnet, daß** nach der Harz- und Glasfaserauftragung ein Verdichtungsvorgang durchgeführt wird.

5. Verfahren nach Anspruch 1, **dadurch gekennzeichnet, daß** in den letzten Stufen eine Nacharbeit der Nachbildung vor ihrer Aushärtung durchgeführt wird, und nach dem Entformen der Nachbildung ihre Ränder durch die Durchführung der entsprechenden quer- und längsgerichteten Schneidvorgänge entgratet werden.

## Revendications

1. Procés pour obtenir des reproductions murales et architecturales à travers du moulage de résines et fibre de verre dans un moule étant muni d'une couche de démoulage et ayant été obtenu par l'application d'une couche de silicone sur le mur ou l'élément architectonique à reproduire, ledit procès comprenant plusieurs phases où sont utilisés des composants pour colorer les reproductions, la polymérisation et le durcissement de la reproduction étant accélérés, après les phases successives du procés de fabrication de ladite reproduction, par le chauffage de celle-ci; **caractérisé en ce que** le chauffage de la reproduction s'obtient en passant celle-ci par un four longitudinal, et **en ce que** le refroidissement progressif de ladite reproduction est ensuite accéléré en la passant par un tunnel de refroidissement.

2. Procés, d'après la revendication 1, **caractérisé en ce que**, une fois déposés sur le moule les composants en poudre servant à colorer la reproduction, une opération d'aspiration est effectuée pour éliminer la poudre n'ayant pas été retenue par la couche de démoulage.

3. Procés, d'après la revendication 1, **caractérisé en ce que** la résine et la fibre de verre sont appliquées en trois phases au moule ayant été pourvu de la couleur, chacune desdites trois phases respectivement impliquant les opérations suivantes: dans la première phase ledit moule est arrosé d'un mélange de résine plus additifs, dans la deuxième phase une couche de fibre de verre avec résine y est appliquée, et dans la troisième phase un arrosage avec des résines additives est effectué obliquement.

4. Procés, d'après la revendication 1, **caractérisé en ce que** une opération de compactage est effectuée après l'application de la résine et la fibre de verre.

5. Procés, d'après la revendication 1, **caractérisé en ce que** dans les phases finales un repassage de la reproduction est effectué avant son durcissement, les bavures de ladite reproduction étant éliminées, après le démoulage, au moyen des pertinentes opérations de coupure transversale et longitudinale.
